(19) Europäisches Patentamt
European Patent Office
Office européen des brevets

(11) EP 4 520 792 A1

(12) EUROPEAN PATENT APPLICATION
published in accordance with Art. 153(4) EPC

(43) Date of publication:
**12.03.2025 Bulletin 2025/11**

(21) Application number: **23799417.3**

(22) Date of filing: **28.03.2023**

(51) International Patent Classification (IPC):
***C08L 69/00*** *(2006.01)* ***C08G 64/06*** *(2006.01)*
***C08K 5/523*** *(2006.01)*

(52) Cooperative Patent Classification (CPC):
**C08G 64/06; C08K 5/523; C08L 69/00**

(86) International application number:
**PCT/JP2023/012592**

(87) International publication number:
**WO 2023/214485 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.05.2022 JP 2022076312**

(71) Applicant: **Mitsubishi Chemical Corporation**
**Tokyo 100-8251 (JP)**

(72) Inventors:
- **HAMAGUCHI Ryuki**
  **Hiratsuka-shi, Kanagawa 254-0016 (JP)**
- **IRIE Yasuyuki**
  **Hiratsuka-shi, Kanagawa 254-0016 (JP)**

(74) Representative: **Vossius & Partner Patentanwälte Rechtsanwälte mbB**
**Siebertstrasse 3**
**81675 München (DE)**

# (54) RESIN COMPOSITION AND MOLDED ARTICLE

(57) A resin composition, comprising: an (A) polycarbonate resin; and with respect to 100 parts by mass of the (A) polycarbonate resin, 0.001 to 0.5 part by mass of (B) tris(2,4-di-tert-butylphenyl) phosphate, wherein the (A) polycarbonate resin comprises a constitutional unit represented by the formula (1); and a mass ratio of the constitutional unit represented by the formula (1) to the (B) tris(2,4-di-tert-butylphenyl) phosphate, (B)/(A-2), satisfies $0.00003 \leq (B)/(A-2) \leq 0.0050$: wherein $R^1$ represents a methyl group.

EP 4 520 792 A1

## Description

[Technical Field]

The present invention relates to a resin composition and a molded article. The present invention relates particularly to a resin composition having a polycarbonate resin as a major component.

[Background Art]

Polycarbonate resins are excellent in mechanical strengths, electric properties, transparency and the like, and are broadly utilized as engineering plastics in various fields such as electric and electronic device fields and automobile fields.

For example, Patent Literature 1 describes that there is provided a static electricity-resistant polycarbonate composition containing a polycarbonate, at least one kind of mold release agent and at least one kind of antistatic agent. It is further described that the disclosed composition contains a thermostabilizer in some cases, and that static electricity-resistant compact discs are molded from this polycarbonate composition.

[Citation List]

[Patent Literature]

Patent Literature 1
Japanese Patent Laid-Open No. 11-279396

[Summary of the Invention]

[Technical Problem]

As described above, polycarbonate resins are used in various applications. Here, while polycarbonate resins using bisphenol A (bisphenol A type polycarbonate resins) as a main raw material are generally used as the polycarbonate resins, in order to raise the surface hardness, blending a polycarbonate resin using bisphenol C as a main raw material (bisphenol C type polycarbonate resin) is under studies.

Here, it has been found that when a bisphenol C type polycarbonate resin is blended, the surface hardness of obtained molded articles is likely to become high, however, the obtained molded articles is likely to become yellow than molded articles having the bisphenol A type polycarbonate resin blended therein. In particular, the present inventor made studies and has found that the obtained molded articles are inferior in the wet heat color change stability. Therefore, also in molded articles having the bisphenol C type polycarbonate resin blended therein, it is demanded that the difference in the degree of yellowing between the molded articles wet heat-treated and the molded articles not wet heat-treated is small.

The present invention aims at solving such a problem, and has an object to provide a resin composition using a polycarbonate resin comprising a constitutional unit represented by the formula (1) described later, such as a bisphenol C type polycarbonate resin, wherein molded articles made from the resin composition exhibit only a small difference in the degree of yellowing between in the case of being wet heat-treated and in the case of not being wet heat-treated, and a molded article.

[Solution to Problem]

The present inventors conducted research to address the above-mentioned problems, and as a result, discovered that the above problems could be solved by blending tris(2,4-di-tert-butylphenyl) phosphate into a predetermined polycarbonate resin, such as the bisphenol C type polycarbonate resin.

Specifically, the problems described above are solved by the following means.

<1> A resin composition, comprising: an (A) polycarbonate resin; and with respect to 100 parts by mass of the (A) polycarbonate resin, 0.001 to 0.5 part by mass of (B) tris(2,4-di-tert-butylphenyl) phosphate, wherein the (A) polycarbonate resin comprises a constitutional unit represented by the formula (1); and a mass ratio of the constitutional unit represented by the formula (1) to the (B) tris(2,4-di-tert-butylphenyl) phosphate, (B)/(A-2), satisfies $0.00003 \leq (B)/(A\text{-}2) \leq 0.0050$:

the formula (1)

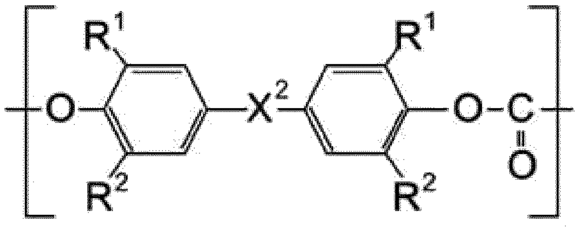

wherein $R^1$ represents a methyl group; $R^2$ represents a hydrogen atom or a methyl group; and $X^2$ represents either one of the following formulae:

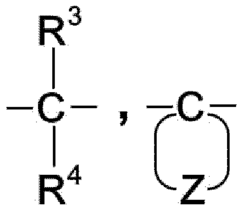

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

<2> The resin composition according to <1>, wherein the (A) polycarbonate resin comprises the constitutional unit represented by the formula (1) in a proportion of 10 to 95% by mol in all constitutional units.
<3> The resin composition according to <1>, wherein the (A) polycarbonate resin comprises the constitutional unit represented by the formula (1) in a proportion of 10 to 80% by mol in all constitutional units.
<4> The resin composition according to any one of <1> to <3>, wherein the (A) polycarbonate resin further comprises a constitutional unit represented by the formula (2):

the formula (2)

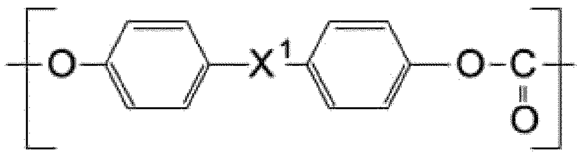

wherein $X^1$ represents either one of the following formulae:

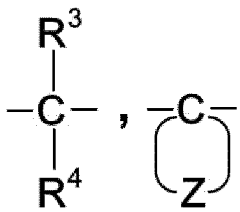

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

<5> The resin composition according to <4>, wherein the (A) polycarbonate resin comprising the constitutional unit

represented by the formula (2) comprises a recycled product.

<6> The resin composition according to <5>, wherein a proportion of the recycled product in the (A) polycarbonate resin is 5 to 80% by mass.

<7> The resin composition according to any one of <1> to <6>, wherein the (A) polycarbonate resin further comprises a constitutional unit represented by the formula (2), and the (A) polycarbonate resin comprising the constitutional unit represented by the formula (2) comprises a recycled product:

the formula (2)

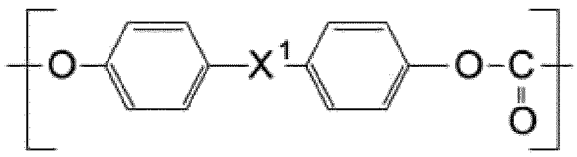

wherein $X^1$ represents either one of the following formulae:

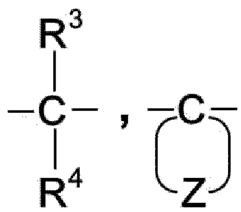

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

<8> A pellet of the resin composition according to any one of <1> to <7>.

<9> A molded article, being formed from the resin composition according to any one of <1> to <7>.

<10> A molded article, being formed from the pellet according to <8>.

[Advantageous Effects of Invention]

The present invention has enabled providing a resin composition using a polycarbonate resin comprising a constitutional unit represented by the formula (1) described later, such as a bisphenol C type polycarbonate resin, wherein molded articles made from the resin composition exhibit only a small difference in the degree of yellowing between in the case of being wet heat-treated and in the case of not being wet heat-treated, and providing a molded article.

[Description of Embodiments]

Hereinafter, embodiments in order to carry out the present invention (hereinafter, referred to simply as "the present embodiments") will be interpreted in detail. Then, the following present embodiments are exemplifications in order to interpret the present invention, and the present invention is not limited only to the present embodiments.

In the present description, "to" is used in the meaning of including numerical values described before and after the "to" as a lower limit value and an upper limit value, respectively.

In the present description, values of various physical properties and values of various properties are, unless otherwise specified, those at 23°C.

In the case where measurement methods and the like described in some standards indicated in the present description depend on years, unless otherwise specified, the methods and the like are based on standards at the time point of January 1, 2022.

A resin composition of the present embodiments contains, with respect to 100 parts by mass of an (A) polycarbonate resin, 0.001 to 0.5 part by mass of (B) tris(2,4-di-tert-butylphenyl) phosphate, wherein the (A) polycarbonate resin is a resin composition comprising a constitutional unit represented by the formula (1); and in the resin composition of the present embodiments, the mass ratio of the constitutional unit represented by the formula (1) to the (B) tris(2,4-di-tert-butylphenyl) phosphate, (B)/(A-2), satisfies $0.00003 \leq (B)/(A\text{-}2) \leq 0.0050$.

The formula (1)

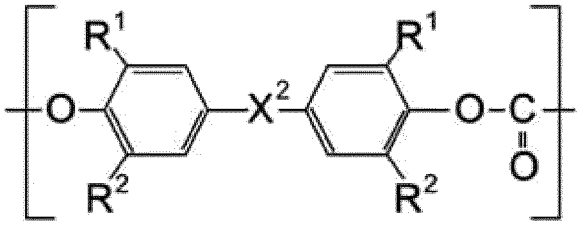

wherein $R^1$ represents a methyl group; $R^2$ represents a hydrogen atom or a methyl group; and $X^2$ represents either one of the following formulae:

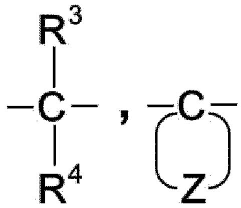

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

Making the (A) polycarbonate resin to have such a constitution enables providing the resin composition having only a small difference in the degree of yellowing between molded articles wet heat-treated (hereinafter, referred to as "wet-heated molded articles" in some cases) and molded articles not wet heat-treated (hereinafter, "initial molded articles"). Further, by blending a polycarbonate resin comprising the constitutional unit represented by the formula (1), molded articles high in the surface hardness are obtained.

The polycarbonate resin comprising the constitutional unit represented by the formula (1), such as a bisphenol C type polycarbonate resin, is likely to easily give molded articles high in the surface hardness. On the other hand, the polycarbonate resin comprising the constitutional unit represented by the formula (1) is likely to be more easily discolored than a polycarbonate resin comprising a constitutional unit represented by a formula (2), such as a bisphenol A type polycarbonate resin. One reason therefor presumably lies in that in the constitutional unit represented by the formula (1), the benzene ring moiety originated from the bisphenol structure is substituted with a methyl group, and the methyl group is easily radicalized. In the present embodiments, it is presumed that by using tris(2,4-di-tert-butylphenyl) phosphate, since the P=O moiety of the tris(2,4-di-tert-butylphenyl) phosphate traps radicals and when there are many tert-butyl groups, the trapped radicals are hardly let escape, yellowing, particularly yellowing of molded articles in the case of being wet heat-treated can effectively be suppressed. It has been found that in particular, by that the mass ratio of the constitutional unit represented by the formula (1) to the (B) tris(2,4-di-tert-butylphenyl) phosphate, (B)/(A-2), satisfies $0.00003 \leq (B)/(A\text{-}2) \leq 0.0050$, the suppression is attained.

Hereinafter, the detail of the present invention will be described.

<(A) Polycarbonate resin>

The resin composition of the present embodiments comprises the constitutional unit represented by the formula (1) and may comprise the constitutional unit represented by the formula (2).

The formula (1)

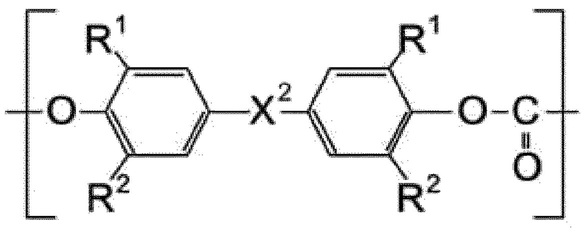

wherein $R^1$ represents a methyl group; $R^2$ represents a hydrogen atom or a methyl group; and $X^2$ represents either one of the following formulae:

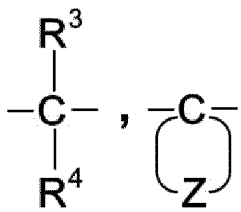

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

The formula (2)

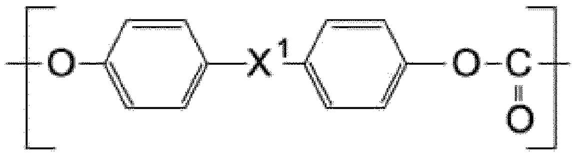

wherein $X^1$ represents either one of the following formulae:

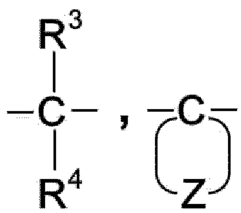

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

A polycarbonate resin to be used in the present embodiments may be a recycled product. In particular, in the present embodiments, it is preferable that a part of or the whole of a polycarbonate resin comprising the constitutional unit represented by the formula (2) is a recycled product. Then, it is preferable that a polycarbonate resin comprising the constitutional unit represented by the formula (1) is a virgin product.

The polycarbonate resin comprising the constitutional unit represented by the formula (1) intrinsically easily yellows. In the present embodiments, however, even when the polycarbonate resin comprising the constitutional unit represented by the formula (1) and a polycarbonate resin of a recycled product constituted of components other than the constitutional unit represented by the formula (1) are blended, the yellowing can effectively be suppressed.

The recycled product is a polycarbonate resin originated from molded articles formed from polycarbonate resins, and means a product obtained by subjecting virgin polycarbonate resins to some molding processing, and purports including polycarbonate resin molded articles, rejected polycarbonate resin molded articles, and mill ends formed in

production of polycarbonate resin molded articles. The molding-processed products purport including injection molded articles, extrusion molded articles and molded articles formed by other production methods.

Recycled polycarbonate resins include ones obtained by material recycling in which recovered post-consumer polycarbonate resin molded articles are crushed and alkali cleaned, and reutilized for fibers and the like, ones obtained by chemical recycling (chemical decomposition method), and ones obtained by mechanical recycling.

The chemical recycling is a process in which a recovered post-consumer polycarbonate resin molded article is chemically decomposed to be returned to a raw material level, and then is resynthesized to a polycarbonate resin. On the other hand, the mechanical recycling is means of enabling fouling of polycarbonate resin molded articles to be more securely removed than the material recycling by strictly carrying out the alkali cleaning in the material recycling, carrying out vacuum drying at a high temperature, or otherwise.

A recycled polycarbonate resin can be obtained from post-consumer polycarbonate resin molded articles, for example, by, after foreign matter is removed, crushing and cleaning the molded articles and then pelletizing the resultant by an extruding machine.

Examples of the post-consumer polycarbonate resin molded articles include discs, sheets (including films), meter covers, headlamp lenses and water bottles.

The virgin products refer to products other than recycled products.

In the case where the resin composition of the present embodiments contains a polycarbonate resin of a recycled product, the proportion of the recycled product in 100% by mass of the (A) polycarbonate resin is preferably 5% by mass or higher, more preferably 11% by mass or higher, still more preferably 20% by mass or higher, further still more preferably 30% by mass or higher and further still more preferably 35% by mass or higher, and then, preferably 80% by mass or lower, more preferably 75% by mass or lower, still more preferably 70% by mass or lower and further still more preferably 65% by mass or lower.

The whole of or a part of a polycarbonate resin to be used in the present embodiments, in particular, a polycarbonate resin comprising the constitutional unit represented by the formula (2), may contain the (B) tris(2,4-di-tert-butylphenyl) phosphate. In particular, there are cases where polycarbonate resins of recycled products contain the (B) tris(2,4-di-tert-butylphenyl) phosphate, and in the present embodiments, such recycled products can effectively be utilized.

In the case where the (A) polycarbonate resin to be used in the present embodiments, in particular, a polycarbonate resin comprising the constitutional unit represented by the formula (2), contains (B) tris(2,4-di-tert-butylphenyl) phosphate, the content thereof is, with respect to 100 parts by mass of the total amount of the polycarbonate resin containing the (B) tris(2,4-di-tert-butylphenyl) phosphate, preferably 10 ppm by mass or higher, more preferably 50 ppm by mass or higher, still more preferably 100 ppm by mass or higher, further still more preferably 150 ppm by mass or higher and further still more preferably 200 ppm by mass or higher, and then, preferably 1,000 ppm by mass or lower, more preferably 800 ppm by mass or lower and still more preferably 500 ppm by mass or lower.

<<Constitutional unit represented by the formula (1)>>

The (A) polycarbonate resin to be used in the present embodiments comprises the constitutional unit represented by the formula (1).

The formula (1)

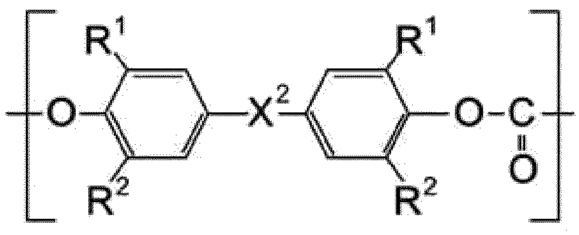

wherein $R^1$ represents a methyl group; $R^2$ represents a hydrogen atom or a methyl group; and $X^2$ represents either one of the following formulae:

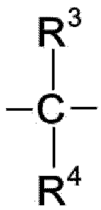 , 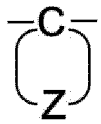

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

Two $R^2$ in the formula (1) may be identical or different, and are preferably identical. $R^2$ are preferably hydrogen atoms.

In the case where in the formula (2), $X^2$ is

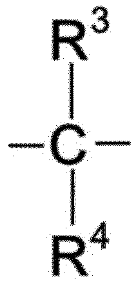

, it is preferable that at least one of $R^3$ and $R^4$ is a methyl group, and it is more preferable that the both are methyl groups.

Then, in the case where $X^2$ is

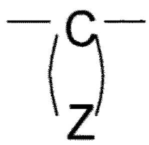

, Z is bonded with carbon C bonded with two phenyl groups in the formula (1) to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Substitution products of the divalent alicyclic hydrocarbon groups include products thereof having a methyl substituent, or an ethyl substituent. Among these, preferable are a cyclohexylidene group, a methyl substitution product of a cyclohexylidene group (preferably, 3,3,5-trimethyl substitution product) and a cyclododecylidene group.

It is preferable that in the formula (1), $X^2$ has the following structure:

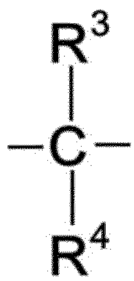

In the present embodiments, it is especially preferable to use a polycarbonate resin comprising the constitutional unit in which in the formula (1), $R^2$ is a hydrogen atom; $X^2$ is

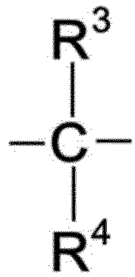

; and $R^3$ and $R^4$ are methyl groups.

In the present embodiments, the (A) polycarbonate resin may contain one kind of the constitutional unit represented by the formula (1), or may contain two or more kinds thereof.

<<Constitutional unit represented by the formula (2)>>

It is preferable that the (A) polycarbonate resin to be used in the present embodiments contains the constitutional unit represented by the formula (2).

The formula (2)

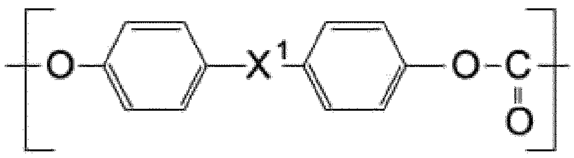

wherein $X^1$ represents either one of the following formulae:

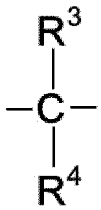 , 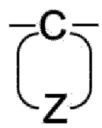

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

The alicyclic hydrocarbon formed by bonding of Z with C includes cycloalkylidene groups such as a cyclohexylidene group, a cycloheptylidene group, a cyclododecylidene group, an adamantylidene group, and a cyclododecylidene group. The alicyclic hydrocarbon having a substituent formed by bonding of Z with C includes methyl substitution products, ethyl substitution products and the like of the above-mentioned alicyclic hydrocarbon groups. Among these, preferable are a cyclohexylidene group, a methyl substitution product of a cyclohexylidene group (preferably, 3,3,5-trimethyl substitution product) and a cyclododecylidene group.

In the case where in the formula (2), $X^1$ is

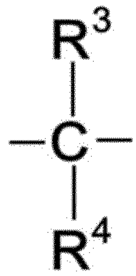

, it is preferable that at least one of $R^3$ and $R^4$ is a methyl group, and it is more preferable that the both are methyl groups.

Then, in the case where $X^1$ is

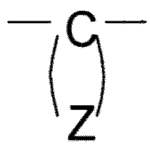

, Z is bonded with carbon C bonded with two phenyl groups in the formula (2) to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Substitution products of the divalent alicyclic hydrocarbon groups include products thereof having a methyl substituent, or an ethyl substituent. Among these, preferable are a cyclohexylidene group, a methyl substitution product of a cyclohexylidene group (preferably, 3,3,5-trimethyl substitution product) and a cyclododecylidene group.

It is preferable that in the formula (2), $X^1$ has the following structure:

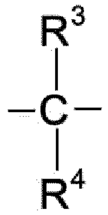

A preferable specific example of the constitutional unit represented by the formula (2) is 2,2-bis(4-hydroxyphenyl)propane, that is, a constitutional unit (carbonate constitutional unit) constituted of bisphenol A.

In the present embodiments, the (A) polycarbonate resin may not contain the constitutional unit represented by the formula (2), and may contain one kind thereof, or may contain two or more kinds thereof.

<<Other constitutional units>>

In the present embodiments, the (A) polycarbonate resin may contain other constitutional units other than the constitutional unit represented by the formula (1) and the constitutional unit represented by the formula (2). As the other constitutional units, there are exemplified constitutional units originated from dihydroxy compounds shown below.

Bis(4-hydroxyphenyl)methane, 2,2-bis(4-hydroxyphenyl)butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl) propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl) fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, 1,1-bis(4-hydroxy-6-methyl-3-tert-butylphenyl)butane.

Then, as one embodiment of the other constitutional units, constitutional units of the description of paragraph 0008 of International Publication No. WO2017/099226, the descriptions of paragraphs 0048 to 0052 of International Publication No. WO2017/099226 and the description of Japanese Patent Laid-Open No. 2011-046769, can be referred to, and the contents thereof are incorporated in the present description.

<<Ratios of constitutional units, physical properties and the like of the polycarbonate resin (A)>>

The proportion of the constitutional unit represented by the formula (1) in the (A) polycarbonate resin to be used in the present embodiments is, in all constitutional units, preferably 10% by mol or higher, more preferably 15% by mol or higher, still more preferably 20% by mol or higher and further still more preferably 25% by mol or higher. The upper limit value of the proportion of the constitutional unit represented by the formula (1) in all the constitutional units is preferably 95% by mol or lower, more preferably 85% by mol or lower, still more preferably 80% by mol or lower, further still more preferably 75% by mol or lower, further still more preferably 65% by mol or lower and further still more preferably 55% by mol or lower.

Then, the proportion of the constitutional unit represented by the formula (2) in all the constitutional units is preferably 5% by mol or higher, more preferably 15% by mol or higher, still more preferably 25% by mol or higher, further still more preferably 35% by mol or higher and further still more preferably 45% by mol or higher. Then, the upper limit value of the proportion of the constitutional unit represented by the formula (2) in all the constitutional units is preferably 90% by mol or lower, more preferably 85% by mol or lower, still more preferably 80% by mol or lower and further still more preferably 75% by mol or lower.

The total of the constitutional unit represented by the formula (1) and the constitutional unit represented by the formula (2) in the (A) polycarbonate resin to be used in the present embodiments accounts for preferably 90% by mol or higher in all the constitutional units, more preferably 95% by mol or higher and still more preferably 97% by mol or higher. The upper limit of the above total is a proportion in which all constitutional units excluding terminal groups are the constitutional unit represented by the formula (1) and the constitutional unit represented by the formula (2).

The polycarbonate resin (A) to be used in the present embodiments is preferably in the following forms. In the present embodiments, (A1) or (A2) is preferable and (A1) is more preferable.

(A1) A blend of a polycarbonate resin comprising the constitutional unit represented by the formula (1) and a polycarbonate resin comprising the constitutional unit represented by the formula (2) (in particular, a blend of a polycarbonate resin comprising 90% by mass or more in all constitutional units of the constitutional unit represented by the formula (1) and a polycarbonate resin comprising 90% by mass or more in all constitutional units of the constitutional unit represented by the formula (2))

(A2) A polycarbonate resin comprising the constitutional unit represented by the formula (1) and the constitutional unit represented by the formula (2)

(A3) A blend of a polycarbonate resin comprising the constitutional unit represented by the formula (1) and a polycarbonate resin comprising the constitutional unit represented by the formula (1) and the constitutional unit represented by the formula (2)

(A4) A blend of a polycarbonate resin comprising the constitutional unit represented by the formula (2) and a polycarbonate resin comprising the constitutional unit represented by the formula (1) and the constitutional unit represented by the formula (2)

(A5) A blend of a polycarbonate resin comprising the constitutional unit represented by the formula (1), a polycarbonate resin comprising the constitutional unit represented by the formula (2) and a polycarbonate resin comprising the constitutional unit represented by the formula (1) and the constitutional unit represented by the formula (2)

(A6) A polycarbonate resin comprising other constitutional units other than the constitutional unit represented by the formula (1) and the constitutional unit represented by the formula (2) constituting the polycarbonate resins or the blends thereof in the above (A1) to (A5)

(A7) A blend of a polycarbonate resin or a blend in the above (A1) to (A6), and a polycarbonate resin constituted of other constitutional units

The lower limit value of the viscosity-average molecular weight (Mv) of the (A) polycarbonate resin to be used in the present embodiments is preferably 5,000 or higher, more preferably 8,000 or higher, still more preferably 10,000 or higher and further still more preferably 12,000 or higher. Then, the upper limit value of Mv is preferably 32,000 or lower,

more preferably 30,000 or lower, still more preferably 29,000 or lower and further still more preferably 27,000 or lower.

In the case of containing two or more kinds of polycarbonate resin, the total of values of a viscosity-average molecular weight of each polycarbonate resin multiplied by each corresponding mass fraction is taken as the viscosity-average molecular weight of the case.

By making the viscosity-average molecular weight to be the above lower limit value or higher, moldability is improved and molded articles high in the mechanical strength are obtained. Then, by making that to be the upper limit value or lower, the flowability for molded articles is improved and thin-wall molded articles and the like can also efficiently be produced.

The viscosity-average molecular weight (Mv) of the polycarbonate resin is determined by using methylene chloride as a solvent, determining the limiting viscosity (η) (unit: dL/g) at a temperature of 20°C by using an Ubbelohde viscometer, and calculating η from the following Schnell's viscosity formula:

$$\eta = 1.23 \times 10^{-4}\ Mv^{0.83}$$

A method for producing the (A) polycarbonate resin to be used in the present embodiments is not especially limited, but for example, descriptions of paragraphs 0027 to 0043 and Examples of Japanese Patent Laid-Open No. 2014-065901 can be referred to, and the contents thereof are incorporated in the present description.

The content of the (A) polycarbonate resin in the resin composition of the present embodiments is preferably 80% by mass or higher, more preferably 85% by mass or higher, still more preferably 90% by mass or higher and further still more preferably 94% by mass or higher. By making the content to be the above lower limit value or higher, the impact strength and the heat resistance of molded articles formed from the resin composition are likely to be more improved. Then, the upper limit value of the content of the (A) polycarbonate resin is preferably an amount in which components other than the (B) tris(2,4-di-tert-butylphenyl) phosphate are polycarbonate resins. By making the content to be the above upper limit value or lower, the surface hardness of molded articles formed from the resin composition is likely to be improved.

<(B) tris(2,4-di-tert-butylphenyl) phosphate>

The resin composition of the present embodiments contains (B) tris(2,4-di-tert-butylphenyl) phosphate in a proportion of 0.001 to 0.5 part by mass with respect to 100 parts by mass of the (A) polycarbonate resin. Due to containing the (B) tris(2,4-di-tert-butylphenyl) phosphate, even in the case where molded articles are wet heat-treated, the difference in YI value from the case of not being wet heat-treated can be made small.

The (B) tris(2,4-di-tert-butylphenyl) phosphate may be added directly to a polycarbonate resin, or as described above, may be a component contained in a polycarbonate resin or the like of recycled products.

The content of the (B) tris(2,4-di-tert-butylphenyl) phosphate in the resin composition of the present embodiments is, with respect to 100 parts by mass of the (A) polycarbonate resin, 0.001 part by mass or higher, and preferably 0.005 part by mass or higher and more preferably 0.01 part by mass or higher, and further may be 0.02 part by mass or higher, 0.03 part by mass or higher, higher than 0.03 part by mass, or 0.04 part by mass or higher. By making the content to be the above lower limit value or higher, the difference in the YI between wet-heated molded articles and initial molded articles can be made small. Then, the upper limit value of the content of the (B) tris(2,4-di-tert-butylphenyl) phosphate is, with respect to 100 parts by mass of the (A) polycarbonate resin, 0.5 part by mass or lower, and preferably 0.4 part by mass or lower, and further, may be 0.3 part by mass or lower, 0.2 part by mass or lower, or 0.1 part by mass or lower. By making the content to be the above upper limit value or lower, the YI of initial molded articles is likely to be made lower.

In the resin composition of the present embodiments, the mass ratio of the constitutional unit represented by the formula (1) to the (B) tris(2,4-di-tert-butylphenyl) phosphate, (B)/(A-2), satisfies $0.00003 \leq (B)/(A\text{-}2) \leq 0.0050$. By making the (B)/(A-2) to be the lower limit value or higher, the ΔYI is likely to be made smaller. Then, by making the (B)/(A-2) to be the above upper limit value or lower, the hardness of molded articles obtained can be made high and the ΔYI can be made small.

The (B)/(A-2) is preferably 0.00010 or higher, and then, preferably 0.0030 or lower, more preferably 0.0020 or lower, still more preferably 0.0010 or lower, further still more preferably 0.00080 or lower and further still more preferably 0.00060 or lower.

The resin composition of the present embodiments can have a constitution containing substantially no triaryl phosphate other than tris(2,4-di-tert-butylphenyl) phosphate. The containing substantially no triaryl phosphate purports that the content of triaryl phosphates other than tris(2,4-di-tert-butylphenyl) phosphate in the resin composition is preferably 10% by mass or lower of the content of tris(2,4-di-tert-butylphenyl) phosphate, more preferably 5% by mass or lower, still more preferably 3% by mass or lower and further still more preferably 1% by mass or lower.

<Other components>

The resin composition of the present embodiments, as required, may contain other components other than the above unless remarkably impairing desired various physical properties. Examples of the other components include thermoplastic resins (for example, acrylic resins) other than the (A) polycarbonate resin, and various types of resin additives.

Examples of the resin additives include mold release agents, stabilizers (thermostabilizers, antioxidants and the like), ultraviolet absorbents, antistatic agents, flame retardants, flame retardant aids, dyes, pigments, anticlouding agents, antiblocking agents, fluidity improvers, plasticizers, dispersants, and antibacterial agents. Then, the resin additives may be contained in one kind, or may be contained in an optional combination and ratio of two or more kinds.

As the antistatic agents, the description of paragraphs 0063 to 0067 of Japanese Patent Laid-Open No. 2016-216534 can be referred to, and the contents thereof are incorporated in the present description.

As the flame retardants, the descriptions of paragraphs 0068 to 0075 of Japanese Patent Laid-Open No. 2016-216534 can be referred to, the contents thereof are incorporated in the present description.

<<Mold release agent>>

The resin composition of the present embodiments may contain a mold release agent.

Examples of the mold release agent include aliphatic carboxylic acids, salts of aliphatic carboxylic acids, esters of an aliphatic carboxylic acid and an alcohol, aliphatic hydrocarbon compounds having a number-average molecular weight of 200 to 15,000, polysiloxane-based silicone oils, ketone waxes and Light Amides, and preferable are aliphatic carboxylic acids, salts of aliphatic carboxylic acids, esters of an aliphatic carboxylic acid and an alcohol.

Examples of the aliphatic carboxylic acids include saturated or unsaturated aliphatic monovalent, divalent or trivalent carboxylic acids. Here, the aliphatic carboxylic acids include also alicyclic carboxylic acids. Among these, preferable aliphatic carboxylic acids are monovalent or divalent carboxylic acids having 6 to 36 carbon atoms and more preferable ones are aliphatic saturated monovalent carboxylic acids having 6 to 36 carbon atoms. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid.

As the aliphatic carboxylic acid in the esters of an aliphatic carboxylic acid and an alcohol, for example, the same aliphatic carboxylic acids as the above aliphatic carboxylic acids can be used. On the other hand, examples of the alcohol include saturated or unsaturated monohydric or polyhydric alcohols. These alcohols may have substituents such as a fluorine atom or an aryl group. Among these, preferable are monohydric or polyhydric saturated alcohols having 30 or less carbon atoms; and more preferable are aliphatic saturated monohydric alcohols or aliphatic saturated polyhydric alcohols having 30 or less carbon atoms. Here, the aliphatic is used as a term including alicyclic compounds.

Specific examples of such alcohols include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

Then, the above esters may contain aliphatic carboxylic acids and/or alcohols as impurities. Further, the above esters may be pure substances, or may be mixtures of plural kinds of compounds. Further, the aliphatic carboxylic acid and the alcohol which are to be bonded to form one ester may be used in one kinds, respectively, or may be used in an optional combination and optional ratio of two or more kinds, respectively, concurrently.

Specific examples of the esters of an aliphatic carboxylic acid and an alcohol include beeswax (mixtures having myricyl palmitate as a main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, pentaerythritol tetrastearate, and rice wax.

Examples of aliphatic hydrocarbons having a number-average molecular weight of 200 to 15,000 include liquid paraffin, paraffin wax, microcrystalline wax, polyethylene wax, Fischer-Tropsch wax, and $\alpha$-olefin oligomer having 3 to 12 carbon atoms. Here, the aliphatichydrocarbons include also alicyclic hydrocarbons. Then, these hydrocarbons may be partially oxidized.

Among these, preferable are paraffin wax, polyethylene wax, and partially oxidized polyethylene wax; and more preferable are paraffin wax and polyethylene wax.

The number-average molecular weight of the above aliphatic hydrocarbons is preferably 5,000 or lower.

Then, the aliphatic hydrocarbons may be single substances, but may be mixtures whose constituents and molecular weights are diverse, and in this case, it is preferable that the main component is in the above range.

Examples of the polysiloxane-based silicone oils include dimethyl silicone oils, methyl phenyl silicone oils, diphenyl silicone oils and fluorinated alkyl silicones.

For the detail of the mold release agent, the descriptions of paragraphs 0055 to 0061 of Japanese Patent Laid-Open No. 2018-095706 can be referred to, and the contents thereof are incorporated in the present description.

In the case where the resin composition of the present embodiments contains the mold release agent, the content thereof is, in the resin composition, preferably 0.05 to 3 % by mass, more preferably 0.1 to 0.8% by mass and still more preferably 0.1 to 0.6% by mass.

The resin composition of the present embodiments may contain only one kind of the mold release agent, or may contain two or more kinds thereof. In the case of containing two or more kinds, it is preferable that the total amount falls within the above range.

<<Stabilizer>>

The stabilizer includes thermostabilizers and antioxidants.

The stabilizer includes phenol-based stabilizers, amine-based stabilizers, phosphorus-based stabilizers, and thioether-based stabilizers. Among these, in the present embodiments, phosphorus-based stabilizers and phenol-based stabilizers are preferable.

As the phosphorus-based stabilizers, any well-known ones can be used. Specific examples include oxo-acids of phosphorus, such as phosphoric acid, phosphonic acid, phosphorous acid, phosphinic acid and polyphosphoric acid; acidic pyrophosphoric acid metal salts such as disodium acid pyrophosphate, potassium acid pyrophosphate and calcium acid pyrophosphate; phosphate salts of group I or group IIB metals, such as potassium phosphate, sodium phosphate, cesium phosphorate and zinc phosphate; and organophosphate compounds, organophosphite compounds, and organophosphonite compounds, but organophosphite compounds are especially preferable.

The organophosphite compounds include triphenyl phosphite, tris(monononylphenyl)phosphite, tris(monononyl/dinonylphenyl)phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, and 2,2-methylenebis(4,6-di-tert-butylphenyl)octyl phosphite.

Specific examples of such organophosphite compounds include "ADK stab(R), (the same applies hereinafter) 1178", "ADK stab 2112", and "ADK stab HP-10", manufactured by Adeka Corp., "JP-351", "JP-360", and "JP-3CP", manufactured by Johoku Chemical Co. Ltd., and "Irgafos(R), (the same applies hereinafter) 168", manufactured by BASF AG.

As the phenol-based stabilizers, hindered phenol-based stabilizers are preferably used. Specific examples of the hindered phenol-based stabilizers include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethyl-ethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, 2-[1-(2-hydroxy-3,5-di-tert-pentylphenyl)ethyl]-4,6-di-tert-pentylphenyl acrylate.

Among these, preferable are pentaerythritol tetrakis[3-(3,5-di-tert-butyl-4-hydroxyphenyl)propionate] and octadecyl-3-(3,5-di-tert-butyl-4-hydroxyphenyl)propionate. Specific examples of such hindered phenol-based stabilizers include "Irganox(R), (the same applies hereinafter) 1010" and "Irganox 1076", manufactured by BASF AG, and "ADK stab AO-50" and "ADK stab AO-60", manufactured by Adeka Corp.

The content of the stabilizer in the resin composition of the present embodiments is, with respect to 100 parts by mass of the (A) polycarbonate resin, usually 0.001 part by mass or higher, and preferably 0.005 part by mass or higher and more preferably 0.01 part by mass or higher, and then, usually 1 part by mass or lower, preferably 0.5 part by mass or lower and more preferably 0.3 part by mass or lower. By making the content of the stabilizer to be in the above range, the effect of adding the stabilizer can more effectively be exhibited.

The resin composition of the present embodiments may contain only one kind of the stabilizer, or may contain two or more kinds. In the case of containing two or more kinds, it is preferable that total amount falls within the above range.

The resin composition of the present embodiments is so regulated that the total of the (A) polycarbonate resin, the (B) tris(2,4-di-tert-butylphenyl) phosphate and the other components to be blended as required becomes 100% by mass.

<Physical property of the resin composition>

It is preferable that the resin composition of the present embodiments is low in the YI (initial YI) as molded articles therefrom. Specifically, the YI when the resin composition of the present embodiments is molded into test pieces of 3 mm in thickness is preferably 2.50 or lower, more preferably 2.30 or lower and still more preferably 2.05 or lower. The lower limit of the initial YI is ideally 0, but even 0.10 or higher sufficiently meets the required performance. Such a low initial YI is attained by using the (B) tris(2,4-di-tert-butylphenyl) phosphate.

It is preferable that the resin composition of the present embodiments is low in the YI (wet-heated YI) as molded articles formed from the resin composition and having been wet heat-treated. The YI (wet-heated YI) of the test pieces of 3 mm in thickness formed from the resin composition of the present embodiments after being wet heat-treated (under the condition of 105°C and 100% in humidity) for 100 hours by a pressure cooker testing machine, is preferably 2.55 or lower, more preferably 2.30 or lower, still more preferably 2.20 or lower and further still more preferably 2.10 or lower. The lower limit of the wet-heated YI is ideally 0, but even 0.10 or higher sufficiently meets the required performance. Such a low wet-heated YI is attained by using the (B) tris(2,4-di-tert-butylphenyl) phosphate.

In the resin composition of the present embodiments, the difference (ΔYI) between the wet-heated YI and the initial YI is preferably 0.23 or lower, more preferably 0.20 or lower, still more preferably 0.19 or lower, further still more preferably 0.15 or lower and further still more preferably 0.10 or lower. The lower limit of the ΔYI is ideally 0, but higher than 0 is practical. Such a low ΔYI is attained by using the (B) tris(2,4-di-tert-butylphenyl) phosphate.

The YI is measured according to the description in Examples described later.

<Method for producing the resin composition>

A method for producing the resin composition of the present embodiments is not limited, and well-known production methods of resin compositions can broadly be adopted, and include a method in which the (A) polycarbonate resin, (B) tris(2,4-di-tert-butylphenyl) phosphate and the other components to be blended as required are previously mixed by using a mixing machine such as a tumbler or a Henschel mixer, and thereafter melt kneaded by a mixing machine such as a Banbury mixer, a roll, a Brabender mixer, a single-screw kneading extruder, a twin-screw kneading extruder or a kneader. Here, the temperature of the melt kneading is not especially limited, but is usually in the range of 240 to 320°C.

<Molded articles>

The resin composition described above (for example, pellets) is molded into molded articles by various types of molding methods. The molded articles of the present embodiments are formed from the resin composition of the present embodiments. The shape of the molded articles is not especially limited, and can suitably be selected according to applications and purposes of the molded articles, and examples thereof include film shape, rod shape, cylindrical shape, annular shape, circular shape, elliptic shape, polygonal shape, profile shape, hollow shape, frame shape, box shape, panel shape and button shape.

A method of molding the molded articles is not especially limited, and a conventionally well-known molding method can be adopted, and examples thereof include an injection molding method, an injection compression molding method, an extrusion method, a profile extrusion method, a transfer molding method, a hollow molding method, a gas-assisted hollow molding method, a blow molding method, an extrusion blow molding method, an IMC (in-mold coating) molding method, a rotomolding method, a multilayer molding method, a two-color molding method, an insert molding method, a sandwich molding method, an expansion molding method, and a pressure molding method. The resin composition of the present embodiments is particularly suitable for molded articles obtained by an injection molding method, an injection compression molding method or an extrusion method. However, it is a matter of course that the resin composition of the present embodiments is not limited to molded articles obtained therefrom.

The molded articles of the present embodiments are suitably used for parts of electric and electronic devices, OA devices, personal digital assistants, mechanical parts, household electric appliances, vehicular parts, various types of vessels, illumination apparatuses, displays and the like.

Examples

The present invention will be described more specifically by way of Examples. The materials, the amounts used, the proportions, the treatment contents, the treatment procedures and the like shown in the following Examples can suitably be changed without departing from the subject matter of the present invention. Accordingly, the scope of the present invention is not limited to specific examples shown below.

In the case where any measuring device or the like used in Examples is difficult to procure due to production abolishment or the like, the measurement can be carried out by using another device having the same performance.

1. Raw materials

The following raw materials shown in Table 1 were used.

[Table 1]

| Component | Details |
|---|---|
| (A-1) Polycarbonate resin | S-3000, a bisphenol A type polycarbonate resin Mitsubishi-Engineering Plastics Corp. |
| (A-2) Polycarbonate resin | A branched aromatic polycarbonate resin produced by a melt polymerization method using bisphenol C as a starting raw material Viscosity-average molecular weight: 20,000 |
| (A-3) Polycarbonate resin | PC2010ANC ((Shanghai Ausell Material Technology Co.) Lot: A20091501, a recycled product, a bisphenol A type polycarbonate resin, containing 270 ppm by mass of tris(2,4-di-tert-butylphenyl) phosphate |
| (B-1) Triaryl phosphate | tris(2,4-di-tert-butylphenyl) phosphate manufactured by Sigma-Aldrich Japan G.K. |
| (B-2) Triaryl phosphate | tris(4-tert-butylphenyl) phosphate manufactured by Fujifilm Wako Pure Chemical Corp. |
| (B-3) Triaryl phosphite | tris(2,4-di-tert-butylphenyl) phosphite ADK Stab 2112, manufactured by Adeka Corp. |
| (C-1) Mold release agent | Unistar M9676, manufactured by NOF Corp. |
| (C-2) Mold release agent | Loxiol VPG861, manufactured by Cognis Japan Ltd. |
| (C-3) Stabilizer | Irganox 1010, manufactured by BAFS AG |

<Production Example 1: Production of a polycarbonate resin (A-2)>

26.14 mol (6.75 kg) of bisphenol C (BPC) and 26.79 mol (5.74 kg) of diphenyl carbonate were charged in an aluminum (SS)-made reactor (internal volume: 10 L) equipped with a stirrer and a distillation condenser; the reactor inside was replaced by nitrogen gas; and the reactor was heated up to 220°C over 30 min in the nitrogen gas atmosphere.

Then, a reaction liquid in the reactor was stirred, and cesium carbonate ($Cs_2CO_3$) was added as a transesterification catalyst in the reaction liquid in a molten state so that the amount of cesium carbonate added became $1.5 \times 10^{-6}$ mol with respect to 1 mol of BPC; and the reaction liquid was stirred and aged at 220°C for 30 min in the nitrogen gas atmosphere. Then, the pressure in the reactor was reduced to 100 Torr over 40 min at the same temperature, and the reaction liquid was further reacted for 100 min to distill out phenol.

Then, the temperature of the reactor inside was raised up to 284°C over 60 min and the pressure was reduced to 3 Torr to distill out phenol in an amount equivalent to the nearly total amount of the theoretical amount of distillation. Then, the pressure of the reactor inside was held at lower than 1 Torr at the same temperature, and the reaction was continued further for 60 min and the polycondensation reaction was finished. At this time, the rotating speed of the stirrer was 38 rotations/min; the temperature of the reaction liquid right before the reaction finish was 289°C; and the stirring power was 0.60 kW.

Then, the reaction liquid as it was in the molten state was fed into a twin-screw extruder; butyl p-toluenesulfonate in an amount 4 mole times the amount of cesium carbonate was fed from the first feed throat of the twin-screw extruder and was kneaded with the reaction liquid; thereafter, the reaction liquid was extruded in a strand shape through the die of the twin-screw extruder, and cut by a cutter to thereby obtain pellets of a polycarbonate resin (A-2).

2. Examples 1 to 7 and Comparative Examples 1 to 6

Each component described in the above Table 1 was blended in a proportion described in the following Table 2 or Table 3 (numerical values corresponding to each component are in parts by mass), and mixed for 20 min by a tumbler; thereafter, the mixture was melt kneaded by using a twin-screw extruder ("TEM-26SX", manufactured by Shibaura Machine Co. Ltd.) at a cylinder temperature of 250°C at a discharge speed of 25 kg/h, and was strand cut to thereby obtain a resin composition (pellets).

<Production of a test piece>

The pellets obtained in the above were dried at 100°C for 5 hours by a hot air circulation type dryer, and thereafter injection molded into a stepped-flat plate test piece of 90 × 60 mm in area, and 1 mm, 2 mm and 3 mm in thickness by using an injection molding machine ("J55AD-60H", manufactured by Japan Steel Works, Ltd.) at a cylinder temperature of 270°C at a mold temperature of 70°C.

<Method of measuring the YI>

The yellow index (YI) of the 3 mm-thickness portion of the test piece obtained by the above method was measured by a color difference meter ("SE6000", manufactured by Nippon Denshoku Industries Co. Ltd.) according to JIS K7105.

<Wet-heating test>

The test piece whose YI had been measured was held for 100 hours in a pressure cooker testing machine under the condition of at a temperature of 105°C and at a humidity of 100%, and thereafter, the YI of the 3 mm-thickness portion was similarly measured (wet-heated YI), and the ΔYI was determined from the following formula. Here, the pressure cooker testing machine used was a "PC-304/422R8D", manufactured by Hirayama Mfg. Corp.

$$\Delta YI = (\text{the wet-heated YI}) - (\text{the initial YI})$$

The ΔYI, which was a difference between the wet-heated YI and the initial YI, was calculated. The results are shown in Tables 2 to 4.

<Pencil hardness>

For the test piece obtained in the above method, the pencil hardness measured at a load of 1 kg was determined by using a pencil hardness tester according to ISO 15184.

The pencil hardness tester used was one manufactured by Toyo Seiki Seisaku-sho Ltd.

[Table 2]

| | Example 1 | Example 2 | Example 3 | Example 4 |
|---|---|---|---|---|
| A-1 | 64.7 | 24.7 | 34.7 | 14.7 |
| A-2 | 35 | 35 | 15 | 35 |
| A-3 | | 40 | 50 | 50 |
| B-1 | 0.05 | 0.0392 | | |
| B-2 | | | 0.0365 | 0.0365 |
| B-3 | | | | |
| C-1 | 0.05 | 0.05 | 0.05 | 0.05 |
| C-2 | 0.1 | 0.1 | 0.1 | 0.1 |
| C-3 | 0.1 | 0.1 | 0.1 | 0.1 |
| | | | | |
| Total amount of tris(2,4-di-tert-butylphenyl) phosphate | 0.05 | 0.05 | 0.0135 | 0.0135 |
| Mass ratio of tris(2,4-di-tert-butylphenyl) phosphate/C-PC | 0.00143 | 0.00143 | 0.00090 | 0.00039 |
| | | | | |
| Initial YI | 1.67 | 1.53 | 1.53 | 1.34 |
| Wet-heated YI | 1.72 | 1.59 | 1.61 | 1.39 |
| ΔYI | 0.05 | 0.06 | 0.08 | 0.05 |
| Pencil hardness | F | F | HB | F |

| | Example 5 | Example 6 | Example 7 |
|---|---|---|---|
| A-1 | 4.7 | 9.7 | 19.7 |
| A-2 | 35 | 50 | 70 |
| A-3 | 60 | 40 | 10 |

(continued)

| | Example 5 | Example 6 | Example 7 |
|---|---|---|---|
| B-1 | | | |
| B-2 | 0.0338 | 0.0392 | 0.0473 |
| B-3 | | | |
| C-1 | 0.05 | 0.05 | 0.05 |
| C-2 | 0.1 | 0.1 | 0.1 |
| C-3 | 0.1 | 0.1 | 0.1 |
| | | | |
| Total amount of tris(2,4-di-tert-butylphenyl) phosphate | 0.0162 | 0.0108 | 0.0027 |
| Mass ratio of tris(2,4-di-tert-butylphenyl) phosphate/C-PC | 0.00046 | 0.00022 | 0.00004 |
| | | | |
| Initial YI | 1.32 | 1.64 | 2.15 |
| Wet-heated YI | 1.36 | 1.72 | 2.27 |
| ΔYI | 0.04 | 0.08 | 0.12 |
| Pencil hardness | F | H | 2H |

[Table 3]

| | Comparative Example 1 | Comparative Example 2 | Comparative Example 3 |
|---|---|---|---|
| A-1 | 64.7 | 64.7 | 49.7 |
| A-2 | 35 | 35 | 50 |
| A-3 | | | |
| B-1 | | | |
| B-2 | 0.05 | | |
| B-3 | | 0.05 | 0.05 |
| C-1 | 0.05 | 0.05 | 0.05 |
| C-2 | 0.1 | 0.1 | 0.1 |
| C-3 | 0.1 | 0.1 | 0.1 |
| | | | |
| Total amount of tris(2,4-di-tert-butylphenyl) phosphate | | | |
| Mass ratio of tris(2,4-di-tert-butylphenyl) phosphate/C-PC | | | |
| | | | |
| Initial YI | 1.76 | 1.66 | 1.95 |
| Wet-heated YI | 1.94 | 1.95 | 2.23 |
| ΔYI | 0.18 | 0.29 | 0.28 |
| Pencil hardness | F | F | H |

| | Comparative Example 4 | Comparative Example 5 | Comparative Example 6 |
|---|---|---|---|
| A-1 | 29.7 | 16.5 | 9.7 |
| A-2 | 70 | 3 | 85 |

(continued)

| | Comparative Example 4 | Comparative Example 5 | Comparative Example 6 |
|---|---|---|---|
| A-3 | | 80 | 5 |
| B-1 | | | |
| B-2 | | 0.284 | 0.0473 |
| B-3 | 0.05 | | |
| C-1 | 0.05 | 0.05 | 0.05 |
| C-2 | 0.1 | 0.1 | 0.1 |
| C-3 | 0.1 | 0.1 | 0.1 |
| | | | |
| Total amount of tris(2,4-di-tert-butylphenyl) phosphate | | 0.0216 | 0.00135 |
| Mass ratio of tris(2,4-di-tert-butylphenyl) phosphate/C-PC | | 0.00720 | 0.00002 |
| | | | |
| Initial YI | 2.09 | 1.3 | 2.31 |
| Wet-heated YI | 2.38 | 1.36 | 2.57 |
| ΔYI | 0.29 | 0.06 | 0.26 |
| Pencil hardness | 2H | 2B | 2H |

In the above Table 2 and Table 3, the "total amount of (B) tris(2,4-di-tert-butylphenyl) phosphate" is the total amount of tris(2,4-di-tert-butylphenyl) phosphate contained in the resin composition, and indicates a summation amount of the (B-1) component added and besides, the component contained in a polycarbonate resin.

Further, in the above Table 2 and Table 3, the "mass ratio of tris(2,4-di-tert-butylphenyl) phosphate (phosphate ester)/C-PC" indicates (B-1) (/A-2), which is a mass ratio of the constitutional unit represented by the formula (1) to (B) tris(2,4-di-tert-butylphenyl) phosphate.

As is clear from the above results, the molded articles formed from the resin composition of the present embodiments were low in the initial YI and also small in the difference (ΔYI) from the YI value after the wet heating treatment (Examples 1 to 17). By contrast, the cases where no tris(2,4-di-tert-butylphenyl) phosphate was contained (Comparative Examples 1 to 4) were high in the ΔYI.

Further, in the case where the mass ratio of tris(2,4-di-tert-butylphenyl) phosphate (phosphate ester)/C-PC was higher than the upper limit of the (B)/(A-2) (Comparative Example 5), the obtained molded article was low in the pencil hardness. On the other hand, in the case where the mass ratio of tris(2,4-di-tert-butylphenyl) phosphate (phosphate ester)/C-PC was lower than the upper limit of the (B)/(A-2) (Comparative Example 6), the initial YI value was high and further, the difference (ΔYI) from the YI value after the wet heating treatment was large.

## Claims

1. A resin composition, comprising: an (A) polycarbonate resin; and with respect to 100 parts by mass of the (A) polycarbonate resin, 0.001 to 0.5 part by mass of (B) tris(2,4-di-tert-butylphenyl) phosphate, wherein the (A) polycarbonate resin comprises a constitutional unit represented by the formula (1); and a mass ratio of the constitutional unit represented by the formula (1) to the (B) tris(2,4-di-tert-butylphenyl) phosphate, (B)/(A-2), satisfies $0.00003 \leq (B)/(A\text{-}2) \leq 0.0050$:

the formula (1)

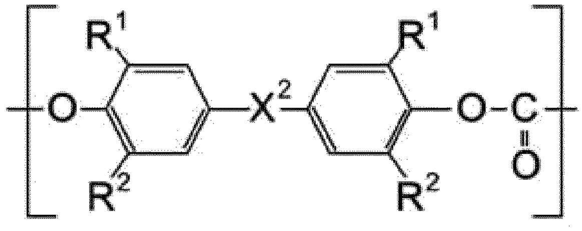

wherein $R^1$ represents a methyl group; $R^2$ represents a hydrogen atom or a methyl group; and $X^2$ represents either one of the following formulae:

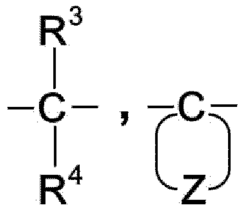

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

2. The resin composition according to claim 1, wherein the (A) polycarbonate resin comprises the constitutional unit represented by the formula (1) in a proportion of 10 to 95% by mol in all constitutional units.

3. The resin composition according to claim 1, wherein the (A) polycarbonate resin comprises the constitutional unit represented by the formula (1) in a proportion of 10 to 80% by mol in all constitutional units.

4. The resin composition according to any one of claims 1 to 3, wherein the (A) polycarbonate resin further comprises a constitutional unit represented by the formula (2):

the formula (2)

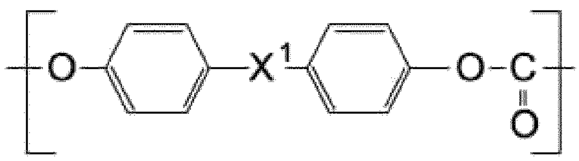

wherein $X^1$ represents either one of the following formulae:

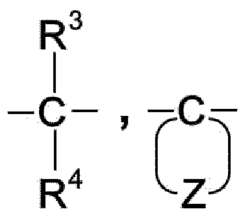

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

**5.** The resin composition according to claim 4, wherein the (A) polycarbonate resin comprising the constitutional unit represented by the formula (2) comprises a recycled product.

**6.** The resin composition according to claim 5, wherein a proportion of the recycled product in the (A) polycarbonate resin is 5 to 80% by mass.

**7.** The resin composition according to claim 1, wherein the (A) polycarbonate resin further comprises a constitutional unit represented by the formula (2), and the (A) polycarbonate resin comprising the constitutional unit represented by the formula (2) comprises a recycled product:

the formula (2)

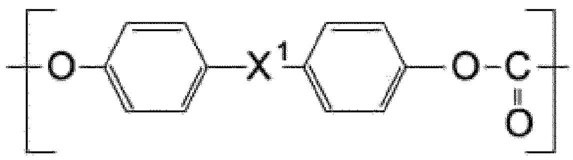

wherein $X^1$ represents either one of the following formulae:

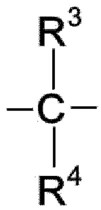 , 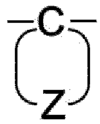

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

**8.** A pellet of the resin composition according to any one of claims 1 to 3 and 7.

**9.** A molded article, being formed from the resin composition according to any one of claims 1 to 3 and 7.

**10.** A molded article, being formed from the pellet according to claim 8.

## INTERNATIONAL SEARCH REPORT

International application No.
**PCT/JP2023/012592**

### A. CLASSIFICATION OF SUBJECT MATTER

***C08L 69/00***(2006.01)i; ***C08G 64/06***(2006.01)i; ***C08K 5/523***(2006.01)i
FI: C08L69/00; C08K5/523; C08G64/06

According to International Patent Classification (IPC) or to both national classification and IPC

### B. FIELDS SEARCHED

Minimum documentation searched (classification system followed by classification symbols)

C08L69/00; C08G64/06; C08K5/523

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | JP 2000-239511 A (TEIJIN LTD.) 05 September 2000 (2000-09-05) claims, paragraphs [0001], [0052], examples 4, 10, 11, 16 | 1-10 |
| Y | JP 11-293101 A (TEIJIN CHEMICALS LTD.) 26 October 1999 (1999-10-26) claims, paragraphs [0011], [0017], examples 1-6 | 1-10 |
| Y | JP 2019-182993 A (MITSUBISHI ENGINEERING PLASTICS CORP.) 24 October 2019 (2019-10-24) claims, paragraphs [0001]-[0006], [0015], [0016], [0064], examples | 1-10 |
| Y | JP 9-183894 A (TEIJIN CHEMICALS LTD.) 15 July 1997 (1997-07-15) claims, paragraph [0005], examples | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/012592**

| Patent document cited in search report | Publication date (day/month/year) | Patent family member(s) | Publication date (day/month/year) |
|---|---|---|---|
| JP 2000-239511 A | 05 September 2000 | TW 526236 B | |
| JP 11-293101 A | 26 October 1999 | (Family: none) | |
| JP 2019-182993 A | 24 October 2019 | (Family: none) | |
| JP 9-183894 A | 15 July 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11279396 A
- WO 2017099226 A
- JP 2011046769 A
- JP 2014065901 A
- JP 2016216534 A
- JP 2018095706 A